**Europäisches Patentamt**

**European Patent Office**

**Office européen des brevets**

(19)

(11) Publication number : **0 157 894 B2**

(12)
# NEW EUROPEAN PATENT SPECIFICATION

(45) Date of publication of the new patent specification : **13.05.92 Bulletin 92/20**

(51) Int. Cl.[5] : **B21C 37/16**

(21) Application number : **84104086.8**

(22) Date of filing : **11.04.84**

(54) **Method and apparatus for increasing thickness of tubular member.**

(43) Date of publication of application :
**16.10.85 Bulletin 85/42**

(45) Publication of the grant of the patent :
**12.10.88 Bulletin 88/41**

(45) Mention of the opposition decision :
**13.05.92 Bulletin 92/20**

(84) Designated Contracting States :
**DE FR GB**

(56) References cited :
**EP-A- 0 102 630
AT-B- 180 462
DE-C- 953 842
DE-C- 957 749
DE-C- 1 002 594
E. Hörmann "Herstellung von Knotenrohren"
VDI-Zeitschrift, Vol. 94 (1952) No. 11/12 pp
343-345.
Dubbels Taschenbuch für den Maschinenbau
2. Vol., 1961, page 618.**

(73) Proprietor : **HITACHI, LTD.
6, Kanda Surugadai 4-chome
Chiyoda-ku, Tokyo 100 (JP)**

(72) Inventor : **Okada, Kenichi
Wakamatsu-so 62-9, Higashimatano-cho
Totsuka-ku Yokohama-shi Kanagawa-ken (JP)**
Inventor : **Asao, Hiroshi
A-103 Tsurumaki-haitsu 3-21-6, Mirokuji
Fujisawa-shi Kanagawa-ken (JP)**
Inventor : **Yonemura, Hideo
2773-3, Ooaza Mawatari
Katsuta-shi Ibaraki-ken (JP)**

(74) Representative : **Patentanwälte Beetz sen. -
Beetz jun. Timpe - Siegfried - Schmitt-Fumian
Steinsdorfstrasse 10
W-8000 München 22 (DE)**

## Description

### BACKGROUND OF THE INVENTION

This invention relates to a method for increasing the thickness of a tubular member of the kind referred to in the pre-characterizing portion of claim 1 Such a method known from DE-C-1 002 594.

A conventional method of increasing the thickness of a tubular member performs an upsetting process by applying a compressive force to the tubular member in its axial direction so as to increase the thickness of the tubular member.

However, this conventional method which effects upsetting by applying a compressive force, that is, a simple compressive process method, can not accomplish a uniform increase in thickness, but produces irregular deformation of the tubular method such as wrinkles and buckling. When the thickness of a pipe is increased by a simple compressive process, deformation takes place throughout the entire length of the pipe, so that irregular deformations such as wrinkles and buckling are likely to occur, as described above.

When this thickness increasing process is performed, the thickness increase occurs on both the outer and inner diameter sides of the pipe. Particularly when the inner diameter of the pipe is small, the increase in thickness on the inner diameter side increases the proportion of the fall of flow rate of a fluid flowing therethrough, causing problems such that cavitation occurs at that portion and corrosion develops thereat while the pipe is in use.

Prior art document DE-C-1 002 594 proposes a method of increasing the thickness of a tubular member in which the tubular member is set into a supporter, the tubular member is then heated and a compressive force is applied in the axial direction of the tubular member. Further rollers or dies are applied to the inner and outer surfaces of the tubular member to limit the extension of the growth in thickness of the tubular member and to prevent irregularities of the surfaces of said tubular member.

### SUMMARY OF THE INVENTION

The present invention is directed to an improvement of a method of increasing the thickness of a tubular member of the kind mentioned above in that no further measures and means as such needed for compressing are necessary to provide a uniform thickness increase without causing any irregular deformations such as wrinkles and buckling, and which can reduce the thickness increase on the inner diameter side.

This object is achieved according to the invention as claimed.

Dependent claims 2 to 6 are directed on features of preferred embodiments of the method and apparatus according to claim 1.

### BRIEF DESCRIPTION OF THE DRAWINGS

Figure 1 is a partially sectioned view of an example of the apparatus for increasing the thickness of a tubular member, which is used for a method of increasing the thickness of a tubular member in accordance with one embodiment of the present invention, together with a tubular member being subjected to the process;

Figure 2 is an enlarged section of the portion of the tubular member in the proximity of a heating coil;

Figure 3 is a graph of the relationship between spindle driving speed and thickness increase ratio, with the speed with which the heating coil is moved kept constant;

Figure 4 is a graph of the relationship between inner diameter-to-outer diameter distribution of the thickness increase and the frequency of the high-frequency current for high-frequency induction heating, with the speed with which the heating coil is moved kept constant;

Figure 5 is a perspective view of an example of a tubular member subjected to a thickness increase by the apparatus for increasing thickness of Figure 1; and

Figure 6 is an enlarged section of part of the tubular member of Figure 5, in the vicinity of the thickened portion.

### DESCRIPTION OF THE PREFERRED EMBODIMENTS

An apparatus for increasing the thickness of a tubular member will first be described. The apparatus includes loading means capable of compressing the tubular member in the axial direction, an annular heating coil positioned around the outer circumference of the tubular member and which is capable of moving in the axial direction of the tubular member, a high-frequency oscillator generating a high-frequency current applied to the heating coil, and a frequency controller capable of controlling the frequency of the high-frequency current.

In further detail, the apparatus has the following construction.

The compressive force is applied to the tubular member while it is being heated locally by a combination of high frequency induction heating and forced cooling, so as to limit the deformation region. This makes it possible to carry out a uniform thickness increase without any irregular deformation. The depth of penetration of the current varies according to the frequency of the high-frequency current. If the penetration depth is small, a temperature gradient is produced in the thickness direction of the workpiece being heated, so that deformation resistance is small on the high-temperature side (surface layer portion) of the workpiece, but high on the low-temperature side, so that a deformation resistance gradient is produced in the thickness direction. In order to positively utilize this phenomenon, the frequency of the high-frequency current used in the high-frequency induction heating is set in such a manner that a desired temperature gradient is obtained in the thickness direction. Thus the ratio of the increase in thickness on the outer diameter side to the increase in thickness on the inner diameter side can be controlled, and the increase of thickness on the inner diameter side can be reduced.

Hereinafter, one embodiment of the present invention will be described in more detail, with reference to the accompanying drawings.

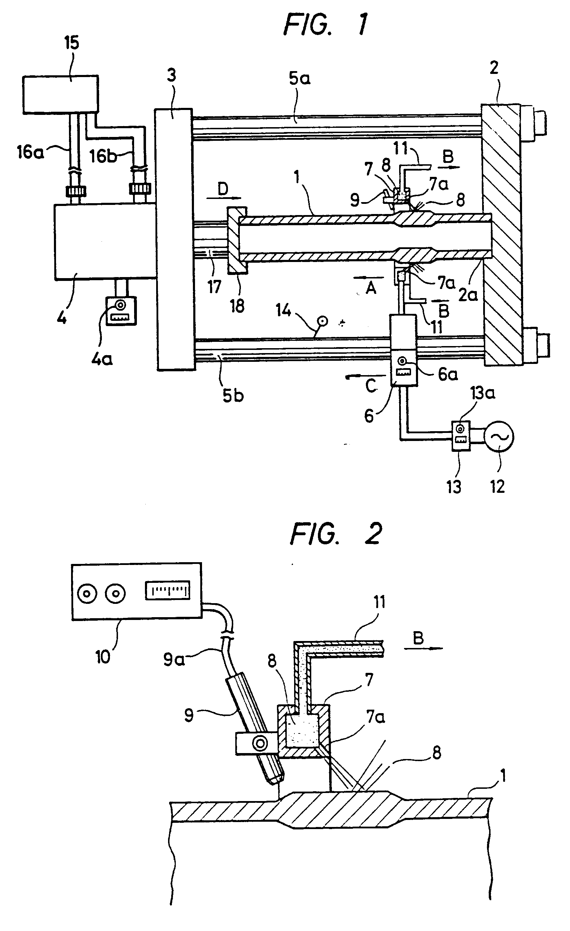

Figure 1 is a partially sectioned view of an example of the apparatus for increasing the thickness of a tubular member together with a tubular member being subjected to the process.

In this drawing, reference numeral 1 represents the tubular member which is the workpiece, 2 is a press bed equipped with a seHing portion 2a for setting one of the ends of the tubular member 1, 3 is a plate equipped on one side surface (on the left in Figure 1) with an hydraulic stepping cylinder 4, and 5a and 5b are support rods positioned opposite to each other with a predetermined spacing between them, which are able to subject the reaction of a compressive force. The support rod 5b also acts as a guide for a transformer 6 as it moves in the axial direction.

Reference numeral 7 represents an annular heating coil which is arranged around the outer circumference of the tubular member 1 and can heat it. This heating coil 7 can move together with the transformer 6 in the axial direction of the tubular member 1. Orifices 7a are provided around the inner peripheral surface of the coil 7 on the opposite side to the direction of advance of the coil, represented by arrow A, these spray part of cooling water 8 for cooling the heating coil 7 onto the tubular member at an angle of about 45°. As shown in detail in Figure 2, a non-contact type of thermometer 9 which can detect the temperature of the heated portion of the tubular member 1 is integrally mounted on the heating coil 7. The thermometer 9 is connected to a control unit 10 by lead wires 9a so that a signal is generated when the heated portion reaches a predetermined temperature. Reference numeral 11 represents a cooling water pipe for supplying the cooling water to the heating coil 7 in the direction represented by arrows B.

Reference numeral 12 represents a high-frequency oscillator that generates a high-frequency current, and reference numeral 13 represents a frequency controller which controls a voltage by signals from the control unit 10 and the frequency of the high-frequency current, and is provided with a frequency-setting dial 13a. The transformer 6 controls the magnitude of the high-frequency current supplied to the coil 7, and is provided with a driving portion which is equipped with a relay switch which is turned on by a signal from the control unit 10, and is turned off by a signal from a limit switch 14, and with a heating coil speed-setting dial 6a. If the heating coil speed-setting dial is set in advance to a predetermined speed, the transformer 6 moves in the direction represented by arrow C in the axial direction of the tubular member 1, guided by the support rod 5a, and thus can move the heating coil 7 at the predetermined speed.

Reference numeral 4 represents a hydraulic cylinder associated with the loading means. The hydraulic stepping cylinder 4 includes a relay switch which is turned on by a signal from the control unit 10, and is turned off by a signal from the limit switch 14, and a hydraulic pressure-setting dial 4a.

Reference numeral 15 represents a hydraulic device supplying a predetermined quantity of oil from hydraulic piping 16a to the hydraulic stepping cylinder 4, and reference numeral 16b represents hydraulic piping for returning the oil. Reference number 17 represents a spindle of the hydraulic stepping cylinder 4 which applies pressure to the tubular member 1 via a support jig 18 disposed at the end thereof, in the direction represented by arrow D.

The limit switch 14 generates a signal when the heating coil 7 has finished heating up to the end of the increased thickness portion and the transformer 6 has come into contact with the limit switch 14. The signal from the limit switch 14 is sent to the relay switch of the transformer 6, to the high-frequency oscillator 12, and to the relay switch of the hydraulic stepping cylinder 4, so that the transformer 6 stops, the driving of the hydraulic stepping cylinder 4 stops, and the high-frequency oscillator 12 stops generating the high-frequency current.

Next, the operation of the apparatus for increasing the thickness of a tubular member, which has the above construction, will be described.

The spindle 17 of the hydraulic stepping cylinder 4 and the transformer 6 are first moved back. The tubular member 1 which is the workpiece is then inserted into the heating coil 7, and one of its ends is then inserted into the setting portion 2a of the press head 2, and the other end is held in the support jig 18 by the spindle 17 advancing in the direction indicated by arrow D. The transformer 6 is moved forward until the heating coil 7 reaches one end of the portion of the tubular member 1 whose thickness is to be increased.

The non-contact type of thermometer 9 of the heating coil 7 is then set to a predetermined temperature, and the frequency of the high-frequency current is likewise set by the frequency-setting dial 13a of the frequency controller 13. The speed of the heating coil and transformer 6 are set by the heating coil speed-setting dial 6a of the transformer 6, while the pressure of the hydraulic cylinder is set by the pressure-setting dial 4a of the hydraulic stepping cylinder 4.

The high-frequency oscillator 12 is turned on so that the heating coil 7 starts the high-frequency induction heating of the tubular member 1, and at the same time the cooling water 8 is supplied from the cooling water pipe 11 to the heating coil 7.

When the portion of the tubular member 1 heated by the heating coil 7 reaches the predetermined temperature described above, the control unit 10 of the non-contact type of thermometer 9 generates a signal which is thereafter received by the relay switoh of the hydraulic stepping cylinder 4 and by the relay switch of the driving portion of the transformer 6. Then the hydraulic stepping cylinder 4 is turned on and pushes the spindle 17 forward by the oil supplied from the hydraulic device 15 at the predetermined pressure, so that the tubular member 1 is compressed in the axial direction, that is, in the direction indicated by arrow D, with a predetermined compressive force. The relay switch of the transformer 6 is also turned on, and the transformer moves in the direction indicated by arrow D at the preset transformer speed, so that the heating of the tubular member is continued at the predetermined temperature. In this instance, the quantity of water sprayed from the orifices 7a of the heating coil 7 is adjusted so that the width of the heating is at most about twice the thickness of the workpiece, and the deformation range of the tubular member is thus reduced.

The temperature of the tubular member 1 is sensed by the non-contact type of thermometer 9, and is controlled since the voltage of the oscillator 12 for the high-frequency current is controlled on the basis of signals from the control unit 10.

When the transformer 6 has moved forward in the direction indicated by arrow C so that the heating coil 7 has finished heating the other end of the portion of the tubular member 1 whose thickness is being increased, the transformer 6 comes into contact with the limit switch 14, whereupon movement of the transformer 6 as well as the driving of the hydraulic stepping cylinder 4 stop, and the high-frequency oscillator 12 stops generating the high-frequency current.

This completes the process of increasing the thickness of the tubular member 1.

Subsequently, after the tubular member 1 has cooled, the supply of cooling water 8 is stopped, and the tubular member 1, whose thickness has thus been increased, is withdrawn.

The following describes a concrete example of the present invention in which a carbon steel pipe with an outer diameter of 216mm ∅, a thickness of 8.6mm and a length of 5.5m, as the tubular member 1, was subjected to an increase in thickness over a length of 500mm at a thickness increase ratio (=thickness increase/thickness of tubular member 1) of 31 %.

The conditions of the high-frequency induction heating by the heating coil 7 were as follows. The frequency was 9 kHz, the output was 85 kW, the heating temperature was 850°C, the speed of the heating coil 7 was 1 mm/min, and the set pressure of the hydraulic stepping cylinder 4 was 53.8 kg/cm². 

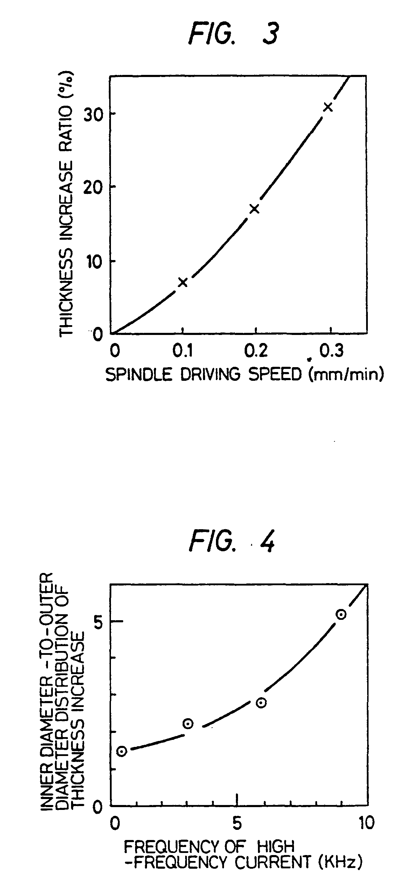

When setting the driving speed for the spindle 17, preparatory tests such as shown in Figure 3 were carried out.

Figure 3 is a graph of the relationship between the driving speed of the spindle and the thickness increase ratio.

The curve in Figure 3 represents the relationship between the driving speed of the spindle 17 and the thickness increase ratio when the speed of the heating coil 7 is 1 mm/min.

As is obvious from this graph, the driving speed of the spindle 17 should be set to about 0.3 mm/min in order to obtain a thickness increase ratio of 31 %.

When setting the frequency of the high-frequency current for the high-frequency induction heating, preparatory tests such as shown in Figure 4 were carried out.

Figure 4 is a graph of the relationship between the frequency of the high-frequency current for the high-frequency induction heating and an inner diameter-to-outer diameter distribution of the thickness increase, for a constant the speed of the heating coil.

The curve in Figure 4 represents the relationship between the frequency of the high-frequency current and the inner diameter-to-outer diameter distribution of the thickness increase when the speed of the heating coil 7 is 1 mm/min.

Generally, in high frequency induction heating, the higher the frequency, the less the depth of penetration of the high-frequency current and the more easy it is for the surface layer portion of the workpiece to be heated. Accordingly, a temperature gradient is produced such that the surface layer portion reaches a high temperature.

Utilizing this characteristic of high-frequency induction heating, when the frequency is increased, the temperature in the proximity of the outer peripheral surface of the tubular material 1 increases, deformation resistance at that portion drops, and any deformation due to the upsetting process occurs preferentially at the portion in the proximity of the outer peripheral surface of the tubular member. As is obvious from Figure 4, therefore, the inner diameter-to-outer diameter distribution of the thickness increase is greater if the frequency of the high frequency current becomes higher.

For instance, the inner diameter-to-outer diameter distribution of the thickness increase may be approximately 5 if the thickness increase on the inner diameter side is within the range of tolerances of thickness stipulated by JIS (Japanese Industrial Standards). The frequency corresponding to this inner diameter-to-outer diameter distribution of the thickness increase of 5 is 9 KHz. Hence, the frequency was set to 9 KHz.

When the increase in thickness of the carbon steel 5 pipe was carried out under the various conditions described above, using the apparatus for increasing thickness of Figure 1, the desired thickness increase ratio of 31% and the inner diameter-to-outer diameter distribution of thickness increase of 5 was achieved, and the increase in thickness was performed without any irregular deformation.

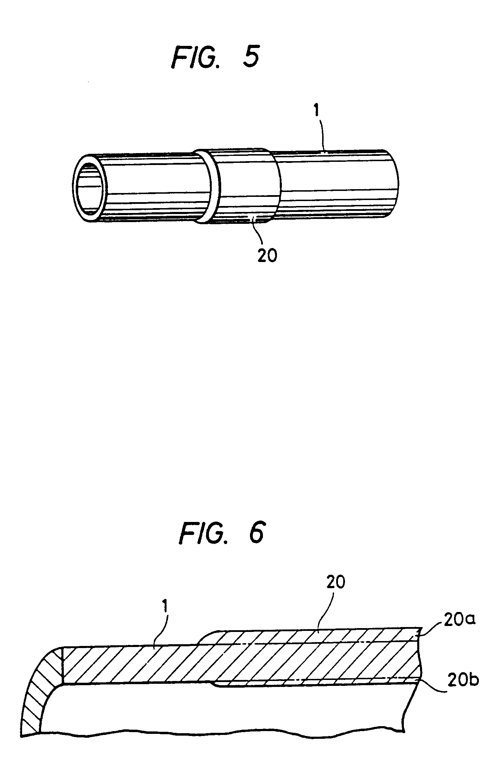

Figure 5 is a perspective view of an example of a tubular member which has been subjected to an increase in thickness by the apparatus for increasing thickness of Figure 1. Figure 6 is an enlarged section of part of the tubular member of Figure 5 including the portion whose thickness has been increased.

In the drawings, reference numeral 20 represents the thickened portion of the tubular member 1, 20a is the thickened portion on the outer diameter side, and 20b is the thickened portion on the inner diameter side. The thickness increase ratio (31 %) of the thickened portion 20 is uniform and is completely devoid of any irregular deformation. In addition, the thickness increase on the inner diameter side is small. (The inner diameter-to-outer diameter distribution of the thickness increase is 5.)

The embodiment described above provides the following effects.

This embodiment can provide a method and apparatus for increasing the thickness of a tubular member which can execute a uniform increase in thickness without any irregular deformations such as wrinkles and buckling, and can reduce the thickness increase on the inner diameter side.

In accordance with this embodiment of the method of increasing the thickness of a tubular member, any part of a tubular member can be subjected to a uniform thickness increase. Accordingly, when a tubular member is subjected to a second process (such as bending, barring, or diameter enlargement), the apparent decrease in thickness due to plastic deformation can be reduced if the portion subjected to this second process is first subjected to an increase in thickness. For this reason, there is no need to use a pipe of a larger thickness, and the material costs can be reduced by 10 to 20%.

In the embodiment described above, since orifices for spraying cooling water are provided for the heating coil, the width of the heating can be controlled advantageously by adjusting the quantity of water sprayed from the orifices.

Incidentally, the occurrence of irregular deformation of a tubular member is small in practice even if there are no such orifices, that is, even if no water is sprayed.

In the embodiment described above, a hydraulic cylinder is used as the means for loading the tubular member, but mechanical screw pressure or the like can be used in place of the hydraulic cylinder. In such a case, the effects of the invention can be obtained in the same way as in the embodiment described above.

In the embodiment described above, a high-frequency current of 9 KHz was used for increasing the thickness of a carbon steel pipe of an outer diameter of 216 mm $\varnothing$ and a thickness of 8.6 mm, to a thickness increase ratio of 31 % and an inner diameter-to-outer diameter distribution of thickness increase of 5. However, the frequency of the high-frequency current varies according to the dimensions of the tubular member being subjeoted to the thickness increase (i.e., the outer diameter and sheet thickness), the thickness increase ratio, and the inner diameter-to-outer diameter distribution of the thickness increase. In short, the frequency can be any value so long as it can provide a temperature gradient between the inner and outer diameter portions of the tubular member when the surface layer portion is at a high temperature.

As described above in detail, the present invention can provide a method and apparatus for increasing the thickness of a tubular member which can accomplish a uniform thickness increase without any irregular deformations such as wrinkles and buckling, and can reduce the thickness increase on the inner diameter side.

## Claims

1. A method of increasing the thickness of a tubular member (1), comprising the steps of: setting the tubular member (1) into a supporter (2, 3, 5a, 5b), heating the tubular member (1) by a heater (7), and applying a compressive force to the tubular member (1) in the axial direction of the tubular member (1) by a pressure supplier (4, 17, 18),
**characterized** in that
said force is applied with a constant speed and by further comprising the steps of: moving the heater (7) along the axial direction of the tubular member (1) at a constant speed to heat locally and progressively the tubular member (1), cooling the heated portion of the tubular member (1), while the heater (7) is moved to control the heating width in said heating step, and controlling the surface temperature of the tubular member (1) to cause a temperature gradient between the inner and outer diameter sides of the tubular member (1) so that the thickness increase on the inner diameter side of the tubular member (1) is reduced.

2. The method of claim 1, wherein, in said cooling step, the heated portion is cooled by a water spray supplied at angle of about 45° from the opposite side to the direction of advance of the heater (7).

3. The method of claim 1, wherein, in said cooling step, the heating width is controlled to be at most about twice the thickness of the tubular member.

4. The method of claim 1, further comprising the steps of: moving the heater (7) along the axial direction of the tubular member (1) at a constant speed to heat locally and progressively the tubular member (1); cooling the heated portion of the tubular member (1) to control a heating width on the tubular member (1) so that the width is at most about twice the thickness of the tubular member (1); and controlling a surface temperature of the tubular member (1) to cause a temperature gradient between the inner and outer diameter sides of the tubular member (1).

5. The method of claim 4, wherein, in said cooling step, the heated portion is cooled by a water spray supplied at angle of about 45° from the opposite side to the direction of advance of the heater (7).

6. The method of claim 4, wherein, in said heating step, the heater (7) is a heating coil; and in said controlling step, the surface temperature of the tubular member is controlled by a thermometer (9) for sensing the surface temperature and a high frequency current supplied to the heating coil (7).

**Patentansprüche**

1. Verfahren zur Erhöhung der Wandstärke eines rohrförmigen Teils (1), umfassend die Schritte: Befestigen des rohrförmigen Teils (1) in einer Halterung (2, 3, 5a, 5b), Erwärmen des rohrförmigen Teils (1) mit einer Heizeinheit (7) und Beaufschlagen des rohrförmigen Teils (1) in seiner Axialrichtung mit einer Druckkraft durch eine Druckzuführeinheit (4, 17, 18), **dadurch gekennzeichnet, daß**
die Kraft mit vorbestimmter Geschwindigkeit aufgebracht wird, und daß ferner folgende Schritte vorgesehen sind: Verschieben der Heizeinheit (7) längs der Axialrichtung des rohrförmigen Teils (1) mit konstanter Geschwindigkeit, so daß das rohrförmige Teil (1) örtlich und fortschreitend erwärmt wird, Kühlen des erwärmten Abschnitts des rohrförmigen Teils (1) während der Bewegung der Heizeinheit (7) zur Regelung der Erwärmungsbreite in dem Erwärmungsschritt, und Regeln der Oberflächentemperatur des rohrförmigen Teils (1) unter Ausbildung eines Temperaturgradienten zwischen der Innen- und der Außendurchmesserseite des rohrförmigen Teils (1), so daß die Wandstärkezunahme an der Innendurchmesserseite des rohrförmigen Teils (1) reduziert wird.

2. Verfahren nach Anspruch 1, wobei bei dem Kühlschritt der erwärmte Abschnitt durch einen Wassersprühstrahl gekühlt wird, der unter einem Winkel von ca. 45° von der zur Vorschubrichtung der Heizeinheit (7) entgegengesetzten Seite zugeführt wird.

3. Verfahren nach Anspruch 1, wobei bei dem Kühlschritt die Erwärmungsbreite so geregelt wird, daß sie höchstens der etwa zweifachen Stärke des rohrförmigen Teils entspricht.

4. Verfahren nach Anspruch 1, ferner umfassend die Schritte: Verschieben der Heizeinheit (7) längs der Axialrichtung des rohrförmigen Teils (1) mit konstanter Geschwindigkeit unter örtlicher und fortschreitender Erwärmung des rohrförmigen Teils (1); Kühlen des erwärmten Abschnitts des rohrförmigen Teils (1) unter Regelung einer Erwärmungsbreite an dem rohrförmigen Teil (1) derart, daß diese Breite höchstens der zweifachen Wandstärke des rohrförmigen Teils (1) entspricht; und Regeln einer Oberflächentemperatur des rohrförmigen Teils (1) unter Ausbildung eines Temperaturgradienten zwischen der Innen- und der Außendurchmesserseite des rohrförmigen Teils (1).

5. Verfahren nach Anspruch 4, wobei bei dem Kühlschritt der erwärmte Abschnitt durch einen Wassersprühstrahl gekühlt wird, der unter einem Winkel von ca. 45° von der der Vorschubrichtung der Heizeinheit (7) entgegengesetzen Seite zugeführt wird.

6. Verfahren nach Anspruch 4, wobei bei dem Kühlschritt die Heizeinheit (7) eine Heizspule ist; und bei dem Regelschritt die Oberflächentemperatur des rohrförmigen Teils von einem die Oberflächentemperatur erfassenden Thermometer (9) und einem der Heizspule (7) zugeführten Hoch-Frequenzstrom geregelt wird.

**Revendications**

1. Procédé pour augmenter l'épaisseur d'un élément tubulaire (1), comprenant les étapes consistant à : placer l'élément tubulaire (1) dans un dispositif de support (2,3,5a,5b), chauffer l'élément tubulaire (1) au moyen d'un dispositif de chauffage (7) et appliquer une force de compression à l'élément tubulaire (1) dans la direction axiale de cet élément tubulaire (1) au moyen d'un dispositif (4,17,18) d'application d'une pression,
caractérisé en ce que
ladite force est appliquée avec une vitesse constante, et comprenant en outre les étapes consistant à : déplacer le dispositif de chauffage (7) dans la direction axiale de l'élément tubulaire (1) à une vitesse constante pour chauffer localement et progressivement l'élément tubulaire (1), refroidir la partie chauffée de l'élément tubulaire (1) alors que le dispositif de chauffage (7) se déplace, de manière à régler la largeur de chauffage lors de ladite étape de chauffage, et commander la température superficielle de l'élément tubulaire (1) pour faire apparaître un gradient de température entre les faces intérieure et extérieure de l'élément tubulaire (1) de manière que l'accroissement de l'épaisseur sur la face intérieure de l'élément tubulaire (1) soit réduite.

2. Procédé selon la revendication 1, selon lequel, lors de ladite étape de refroidissement, la partie chauffée est refroidie par une projection d'eau envoyée, à partir de la face opposée, sous un angle d'environ 45° par rapport à la direction d'avance du dispositif de chauffage (7).

3. Procédé selon la revendication 1, selon lequel, lors de ladite étape de refroidissement, la largeur de chauffage est réglée de manière à être égale au maximum au double environ de l'épaisseur de l'élément tubulaire.

4. Procédé selon la revendication 1, comportant en outre les étapes consistant à : déplacer le dispositif de chauffage (7) dans la direction axiale de l'élément tubulaire (1) à une vitesse constante de manière à chauffer localement et progressivement l'élément tubulaire (1); refroidir la partie chauffée de l'élément tubulaire (1) de manière à régler une largeur de chauffage sur l'élément tubulaire (1) de telle sorte que la largeur soit égale au maximum au double environ de l'épaisseur de l'élément tubulaire (1); et commander la température superficielle de l'élément tubulaire (1) de manière à faire apparaître un gradient de température entre les faces intérieure et extérieure de l'élément tubulaire (1).

5. Procédé selon la revendication 4, selon lequel, lors de ladite étape de refroidissement, la partie chauffée est refroidie par une projection d'eau envoyée, à partir de la face opposée, sous un angle d'environ 45° par rapport à la direction d'avance du dispositif de chauffage (7).

6. Procédé selon la revendication 4, selon lequel, lors de ladite étape de chauffage, le dispositif de chauffage (7) est une bobine de chauffage; et, lors de ladite étape de réglage, la température superficielle de l'élément tubulaire est réglée par un thermomètre (9) servant à détecter la température superficielle et au moyen d'un courant à haute fréquence envoyé à la bobine de chauffage (7).

## FIG. 1

## FIG. 2

FIG. 3

FIG. 4

## FIG. 5

## FIG. 6